(19) Europäisches Patentamt
European Patent Office
Office européen des brevets

(11) **EP 2 771 567 B1**

(12) **EUROPÄISCHE PATENTSCHRIFT**

(45) Veröffentlichungstag und Bekanntmachung des Hinweises auf die Patenterteilung:
**19.03.2025   Patentblatt 2025/12**

(21) Anmeldenummer: **12780462.3**

(22) Anmeldetag: **15.10.2012**

(51) Internationale Patentklassifikation (IPC):
**F02P 19/02** (2006.01)     F02P 17/12 (2006.01)

(52) Gemeinsame Patentklassifikation (CPC):
**F02P 19/025;** F02P 17/12

(86) Internationale Anmeldenummer:
**PCT/EP2012/070416**

(87) Internationale Veröffentlichungsnummer:
**WO 2013/060594 (02.05.2013 Gazette 2013/18)**

(54) **VERFAHREN UND VORRICHTUNG ZUR BESTIMMUNG EINER OBERFLÄCHENTEMPERATUR EINER GLÜHSTIFTKERZE IN EINEM VERBRENNUNGSMOTOR**

METHOD AND APPARATUS FOR DETERMINING THE SURFACE TEMPERATURE OF A GLOW PLUG IN A COMBUSTION ENGINE

PROCEDE ET DISPOSITIF POUR DETERMINER LA TEMPERATURE DE SURFACE D'UNE BOUGIE DANS UN MOTEUR A COMBUSTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **28.10.2011   DE 102011085435**

(43) Veröffentlichungstag der Anmeldung:
**03.09.2014   Patentblatt 2014/36**

(73) Patentinhaber: **Robert Bosch GmbH**
**70442 Stuttgart (DE)**

(72) Erfinder: **KAPPELMANN, Peter**
**70565 Stuttgart (DE)**

(56) Entgegenhaltungen:
EP-A1- 0 638 770     EP-A2- 0 315 034
EP-A2- 1 298 321     DE-A1- 102006 060 632
DE-A1- 102009 046 438     DE-A1- 102009 047 650

EP 2 771 567 B1

## Beschreibung

Stand der Technik

Die Erfindung betrifft ein Verfahren zur Bestimmung einer Oberflächentemperatur einer Glühstiftkerze in einem Verbrennungsmotor, bei welchem ein physikalischer Parameter zur Ermittlung der Oberflächentemperatur herangezogen wird sowie eine Vorrichtung zur Durchführung des Verfahrens.

Glühstiftkerzen, welche in Verbrennungsmotoren zur Zündung eines Kraftstoff-Luft-Gemisches eingesetzt werden, weisen einen Heizer auf, welcher die kalte Glühstiftkerze auf eine Temperatur vorglüht, die so hoch ist, dass diese für die Zündung des Kraftstoff-Luft-Gemisches ausreicht. Allerdings ist die Verteilung der Temperatur ausgehend von dem Heizer über die gesamte Glühstiftkerze sehr inhomogen, so dass sich Temperaturdifferenzen zwischen der Temperatur des Heizers, der sich im Inneren der Glühstiftkerze befindet und der Temperatur an der Oberfläche der Glühstiftkerze ergeben.

Da die Glühstiftkerze in den Brennraum des Verbrennungsmotors ragt, wird die Oberfläche der Glühstiftkerze immer von dem Kraftstoff-Luft-Gemisch, das bei einem dynamischen Betrieb des Verbrennungsmotors an der Glühstiftkerze vorbeiströmt, gekühlt, so dass die Oberfläche der Glühstiftkerze niemals die Temperatur des Heizers im Inneren der Glühstiftkerze aufweist.

Soll die Temperatur der Glühstiftkerze einer Regelung unterzogen werden, erfolgt dies in Abhängigkeit des Widerstandes eines Heizers im Inneren der Glühstiftkerze, aus welcher der Regelistwert der Temperatur ermittelt wird. Dabei ist der Widerstand umso größer, je höher die Temperatur des als stromführender Draht ausgebildeten Heizers ist. Aufgrund der auftretenden Temperaturdifferenz ist die Güte der Regelung der Glühstiftkerzentemperatur nicht ausreichend, da diese nicht auf einer Temperatur beruht, die an der Oberfläche der Glühstiftkerze tatsächlich auftritt.

Aus der DE 10 2009 047 650 A1 ist ein Verfahren zur Bestimmung einer Temperatur einer Glühstiftkerze in einem Verbrennungsmotor bekannt, bei welchem eine Temperaturdifferenz zwischen der Temperatur der Glühstiftkerze an einem Ort außerhalb des Heizers und der Temperatur am Heizer der Glühstiftkerze in Abhängigkeit der Betriebsparameter des Verbrennungsmotors bestimmt wird. Diese Vorgehensweise ist sehr rechenintensiv und erfordert einen hohen Entwicklungsaufwand.

Ein weiteres Verfahren zur Bestimmung einer Temperatur einer Glühstiftkerze in einem Verbrennungsmotor ist aus DE 10 2006 060 632 A1 bekannt.

Offenbarung der Erfindung

Der Erfindung liegt die Aufgabe zugrunde, ein Verfahren und eine Vorrichtung zur Bestimmung einer Oberflächentemperatur einer Glühstiftkerze in einem Verbrennungsmotor anzugeben, bei welchen eine genaue Oberflächentemperatur bei reduziertem Rechen- bzw. Entwicklungsaufwand ermittelbar ist.

Erfindungsgemäß wird die Aufgabe durch die Merkmale der beigefügten Ansprüche 1 oder 8.

Vorteilhafterweise wird mindestens einer der wenigstens zwei physikalischen Parameter zur Bestimmung der Oberflächentemperatur der Glühstiftkerze an der Glühstiftkerze während deren Betriebes gemessen. Da der aktuelle Betriebszustand der Glühstiftkerze über deren aktuelle physikalischen Parameter in die Ermittlung der Oberflächentemperatur eingeht, verbessert sich die Genauigkeit der so ermittelten Oberflächentemperatur.

In einer Ausgestaltung wird mindestens einer, der zwei physikalischen Parameter der Glühstiftkerze aus mindestens einem weiteren physikalischen Parameter, welcher an der Glühstiftkerze während deren Betriebs gemessen wird, berechnet. Dadurch wird jederzeit sichergestellt, dass der berechnete physikalische Parameter im direkten Zusammenhang mit dem aktuellen Betriebszustand der Glühstiftkerze steht, wodurch genaue, aus den tatsächlichen Betriebsparametern der Glühstiftkerze abgeleitete Oberflächentemperaturen ermittelt werden.

Ferner wird der mindestens eine berechnete physikalische Parameter in einem Kennfeld abgelegt, wobei dieser mindestens eine physikalische Parameter aus dem Kennfeld zur Berechnung der Oberflächentemperatur der Glühstiftkerze ausgelesen wird. Diese indirekte Bestimmung der Oberflächentemperatur erlaubt eine einmalige Bestimmung des Kennfeldes für die jeweilig genutzte Glühstiftkerze, wobei dieses Kennfeld im Betrieb der Glühstiftkerze zur Bestimmung der Oberflächentemperatur jederzeit genutzt werden kann.

In einer Weiterbildung werden als wenigstens zwei physikalische Parameter ein Widerstand der Glühstiftkerze und/oder eine von der Glühstiftkerze aufgenommene Leistung und/oder ein Effektivstrom der Glühstiftkerze und/oder eine Spannung der Glühstiftkerze verwendet. Durch die Auswahl zweier dieser physikalischen Parameter lässt sich die Oberflächentemperatur der Glühstiftkerze einfach und zuverlässig bestimmen.

In einer Variante werden der Widerstand der Glühstiftkerze und/oder die von der Glühstiftkerze aufgenommene Leistung aus dem gemessenen Strom und der gemessenen Spannung der Glühstiftkerze errechnet. Somit müssen nur zwei physikalische Größen an der Glühstiftkerze gemessen werden, aus denen sich weitere physikalische Parameter der Glühstiftkerze ermitteln lassen. Dies reduziert den Messaufwand deutlich.

In einer weiteren Ausführungsform wird die ermittelte Oberflächentemperatur mit einem Korrekturfaktor korrigiert, welcher insbesondere von mindestens einem Betriebsparameter des Verbrennungsmotors abhängt. Die Korrektur der Oberflächentemperatur trägt dem Umstand Rechnung, dass die Glühstiftkerze während des Betriebes des Verbrennungsmotors ausgekühlt wird. Die Diskrepanz, welche dadurch entsteht, dass die Oberflächentemperatur nicht mehr in einem linearen Zusammenhang zur Temperatur des im Inneren der Glühstiftkerze angeordneten Heizers steht, wird durch den Korrekturfaktor ausgeglichen.

Vorzugsweise werden als Betriebsparameter eine Drehzahl und/oder eine Einspritzmenge und/oder eine Luftmasse und/oder ein Ladedruck der Luftmasse des Verbrennungsmotors herangezogen. Durch die Berücksichtigung dieser Betriebsparameter des Verbrennungsmotors wird eine genaue Korrektur der Oberflächentemperatur ermöglicht, da diese die tatsächlichen Umgebungsbedingungen der Glühstiftkerze im Verbrennungsmotor wiedergeben. Da diese Betriebsparameter auch für die Auswertung anderer Situationen des Verbrennungsmotors detektiert werden, ist kein zusätzlicher hardwaremäßiger Aufwand notwendig, um diese Messdaten zu erhalten.

In einer Weiterbildung wird die ermittelte Oberflächentemperatur der Glühstiftkerze als Isttemperatur für eine Temperaturregelung der Glühstiftkerze verwendet. Diese Temperaturregelung ist insbesondere im instationären Betrieb der Glühstiftkerze von Vorteil. Aufgrund dieser hochgenau ermittelten Oberflächentemperatur wird die Güte der Regelung verbessert.

Eine Weiterbildung der Erfindung betrifft eine Vorrichtung zur Bestimmung einer Oberflächentemperatur einer Glühstiftkerze in einem Verbrennungsmotor, bei welchem ein physikalischer Parameter zur Ermittlung der Oberflächentemperatur herangezogen wird. Um eine genaue Oberflächentemperatur bei reduziertem Rechen- bzw. Entwicklungsaufwand zu ermitteln, sind Mittel vorhanden, welche wenigstens zwei physikalische Parameter nur der Glühstiftkerze zur Bestimmung der Oberflächentemperatur der Glühstiftkerze verwenden. Dies hat den Vorteil, dass die Oberflächentemperatur auf besonders einfache und trotzdem genaue Weise bestimmt werden kann. Unter den wechselnden Bedingungen der Arbeitsweise des Verbrennungsmotors und der sich somit ändernden Eigenschaften der Glühstiftkerze wird die Oberflächentemperatur mit einer an sich im Kraftfahrzeug vorhandenen Vorrichtung einfach bestimmt.

Vorteilhafterweise ist ein Steuergerät mit einer, in einen Brennraum des Verbrennungsmotors ragenden Glühstiftkerze verbunden, wobei das Steuergerät die wenigstens zwei physikalischen Parameter bestimmt. Die so von dem Steuergerät sehr genau ermittelte Oberflächentemperatur ist für eine Temperatursteuerung bzw. Temperaturregelung der Glühstiftkerze auswertbar.

Die Erfindung lässt zahlreiche Ausführungsformen zu. Eine davon soll anhand der in der Zeichnung dargestellten Figuren näher erläutert werden.

Es zeigt:

Figur 1: Prinzipdarstellung der Anordnung einer Glühstiftkerze in einem Verbrennungsmotor
Figur 2: schematisches Ablaufdiagramm zur Bestimmung der Oberflächentemperatur einer Glühstiftkerze

Kalte Verbrennungsmotoren, insbesondere Dieselmotoren, benötigen bei Umgebungstemperaturen von < 40°C eine Starthilfe zur Zündung des in den Dieselmotor eingeleiteten Kraftstoff-Luft-Gemisches. Als Starthilfe werden Glühsysteme eingesetzt, welche aus Glühstiftkerzen, einem Glühzeitsteuergerät und einer Glühsoftware, welche in einem Motorsteuergerät abgelegt ist, besteht.

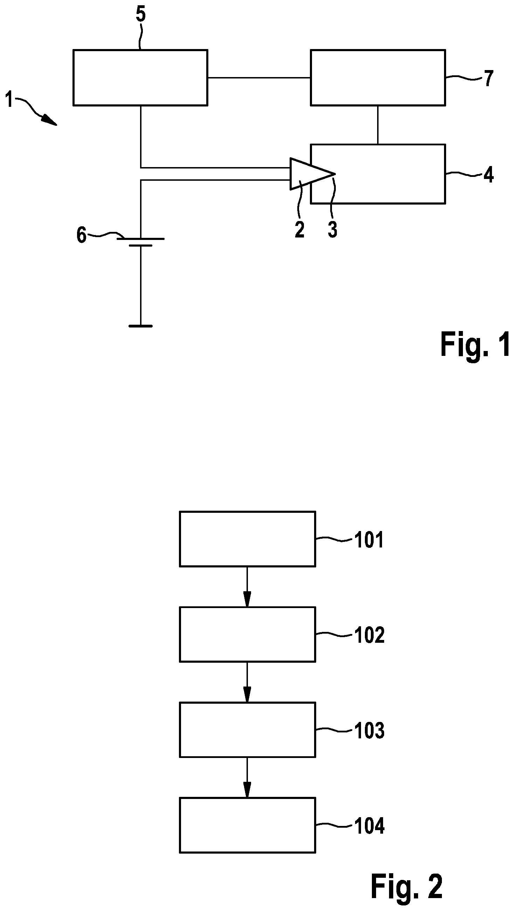

Figur 1 zeigt ein solches Glühsystem 1. Eine Glühstiftkerze 2 ragt dabei in den Brennraum 3 des Dieselmotors 4. Die Glühstiftkerze 2 ist einerseits mit dem Glühzeitsteuergerät 5 verbunden und führt andererseits an eine Bordnetzspannung 6, die die Glühstiftkerze 2 mit einer Nennspannung von beispielsweise 11 Volt ansteuert. Das Glühzeitsteuergerät 5 ist mit dem Motorsteuergerät 7 verbunden, welches wiederum an den Dieselmotor 4 führt.

Zur Zündung des Kraftstoff-Luft-Gemisches wird die Glühstiftkerze 2 in einer Push-Phase, die 1 bis 2 s dauert, durch das Anlegen einer Überspannung vorgeheizt. Die elektrische Energie, die der Glühstiftkerze 2 somit zugeführt wird, wird durch einem nicht weiter dargestellten Heizer der Glühstiftkerze 2 in Wärme umgewandelt. Dabei steigt die Temperatur an der Spitze der Glühstiftkerze 2 steil an. Die Heizleistung des Heizers wird über das elektronische Glühzeitsteuergerät 5 an die Anforderung des jeweiligen Dieselmotors 4 angepasst.

Das Kraftstoff-Luft-Gemisch wird an der heißen Spitze der Glühstiftkerze 2 vorbeigeleitet und erwärmt sich dabei. Gleichzeitig kühlt die Spitze der Glühstiftkerze 2 aus. Verbunden mit einer Ansauglufterwärmung während des Verdichtertaktes des Dieselmotors 4 wird die Entflammungstemperatur des Kraftstoff-Luft-Gemisches erreicht.

Für Applikationen der im Dieselmotor 4 ablaufenden Verbrennungsprozesse ist es notwendig, eine genaue Oberflächentemperatur $T_{Kerze}$ der Glühstiftkerze 2 zu kennen. Die Bestimmung der Oberflächentemperatur $T_{Kerze}$ soll anhand von dem Ablaufdiagramm in Figur 2 erläutert werden. Im Block 101 werden ein Strom und eine Spannung an der Glühstiftkerze 2 gemessen. Aus diesem Strom und der Spannung werden im Block 102 der Widerstand $R_{Kerze}$ der Glühstiftkerze 2 und die momentan durch die Glühstiftkerze aufgenommene Leistung $P_{Kerze}$ berechnet. Diese berechneten Werte Widerstand $R_{Kerze}$ der Glühstiftkerze 2 und die momentan von der Glühstiftkerze 2 aufgenommene Leistung $P_{Kerze}$ werden in einem Kennfeld im Block 103 abgelegt. Aus diesem berechneten Widerstand $R_{Kerze}$ der Glühstiftkerze 2 und der momentan von der Glühstiftkerze 2 aufgenommenen Leistung $P_{Kerze}$ wird die Oberflächentemperatur $T_{Kerze}$ berechnet. Die mathematische Beziehung lautet:

$$T_{Kerze} = T_{Kerze}(R_{Kerze}, P_{Kerze})$$

Im Block 104 erfolgt eine Korrektur der im Block 103 berechneten Oberflächentemperatur $T_{Kerze}$, da die Glühstiftkerze 2 während des Betriebes des Dieselmotors 4 ausgekühlt wird und die Oberflächentemperatur $T_{Kerze}$ während des Motorbetriebes nicht mehr in einem lineare Zusammenhang zur Temperatur des Heizers steht. Für die Ermittlung der Oberflächentemperatur $T_{Kerze}$ ergibt sich somit folgender Zusammenhang:

$$T_{Kerze} = T_{Kerze}(R_{Kerze}, P_{Kerze}) + \Delta T(q, n, m_{Luft}, \ldots).$$

Dabei wird die Oberflächentemperatur $T_{Kerze}$ der Glühstiftkerze 2 in Abhängigkeit von beispielsweise der Drehzahl n, der Ansaugluftmenge $m_{Luft}$ bzw. des Ladedruckes T der Luftmasse korrigiert. Mit diesen Betriebsparametern des Dieselmotors 4 wird die Genauigkeit der Oberflächentemperatur $T_{Kerze}$ der Glühstiftkerze 2 verbessert.

Aufgrund dieser Vorgehensweise ist eine einfachere und sichere Bestimmung der Oberflächentemperatur $T_{Kerze}$ der Glühstiftkerze 2 ohne großen Rechenaufwand möglich. Die Korrektur der Oberflächentemperatur $T_{Kerze}$ der Glühstiftkerze 2 über Motordrehzahl n, Ansaugluftmenge $m_{Luft}$, Einspritzmenge q etc. ist nur in Ausnahmefällen notwendig, da die Bestimmung der Oberflächentemperatur $T_{Kerze}$ der Glühstiftkerze 2 über mindestens zwei physikalische Parameter nur der Glühstiftkerze 2 schon sehr genau ist.

Die Bestimmung der Oberflächentemperatur $T_{Kerze}$ der Glühstiftkerze 2 ist nicht auf die Kombination von Widerstand $R_{Kerze}$ der Glühstiftkerze 2 und der momentan von der Glühstiftkerze 2 aufgenommenen Leistung $P_{Kerze}$ beschränkt. Es sind eine Vielzahl anderer Kombinationen, wie beispielsweise Widerstand $R_{Kerze}$ der Glühstiftkerze 2 und Spannung der Glühstiftkerze 2 oder Widerstand $R_{Kerze}$ der Glühstiftkerze 2 und Strom der Glühstiftkerze 2 denkbar. Entscheidend ist, dass die zur Bestimmung der Oberflächentemperatur $T_{Kerze}$ der Glühstiftkerze 2 herangezogenen physikalischen Größen ausschließlich auf den jeweiligen Betriebszustand der Glühstiftkerze 2 selbst zurückzuführen ist.

## Patentansprüche

1. Verfahren zur Bestimmung einer Oberflächentemperatur einer Glühstiftkerze in einem Verbrennungsmotor, bei welchem ein physikalischer Parameter (RKerze ,PKerze) zur Ermittlung der Oberflächentemperatur (TKerze ) herangezogen wird, wobei wenigstens zwei physikalische Parameter (RKerze ,PKerze) nur der Glühstiftkerze (2) zur Bestimmung der Oberflächentemperatur (TKerze ) der Glühstiftkerze (2) genutzt werden, **dadurch gekennzeichnet, dass** als wenigstens zwei physikalische Parameter ein Widerstand (RKerze ) der Glühstiftkerze (2) und eine von der Glühstiftkerze (2) aufgenommene Leistung (PKerze ) oder ein Widerstand (RKerze ) der Glühstiftkerze (2) und ein Effektivstrom der Glühstiftkerze (2) oder ein Widerstand (RKerze ) der Glühstiftkerze (2) und eine Spannung der Glühstiftkerze (2) verwendet werden, und dass die wenigstens zwei physikalische Parameter als Eingangssignale eines Kennfelds zur Bestimmung der Oberflächentemperatur im Betrieb der Glühstiftkerze genutzt werden.

2. Verfahren nach Anspruch 1, **dadurch gekennzeichnet, dass** mindestens einer der wenigstens zwei physikalischen Parameter ($R_{Kerze}$ ,$P_{Kerze}$) zur Bestimmung der Oberflächentemperatur ($T_{Kerze}$ ) der Glühstiftkerze (2) an der Glühstiftkerze (2) während deren Betriebes gemessen wird.

3. Verfahren nach Anspruch 1, **dadurch gekennzeichnet, dass** mindestens einer der zwei physikalischen Parameter ($R_{Kerze}$ ,$P_{Kerze}$) der Glühstiftkerze (2) aus mindestens einem weiteren physikalischen Parameter, welcher an der Glühstiftkerze (2) während deren Betriebs gemessen wird, berechnet wird.

4. Verfahren nach Anspruch 1, **dadurch gekennzeichnet, dass** der Widerstand ($R_{Kerze}$ ) der Glühstiftkerze (2) und/oder die von der Glühstiftkerze (2) aufgenommene Leistung ($P_{Kerze}$ ) aus dem gemessenen Strom und der gemessenen Spannung der Glühstiftkerze (2) errechnet werden.

5. Verfahren nach mindestens einem der vorhergehenden Ansprüche, **dadurch gekennzeichnet, dass** die ermittelte Oberflächentemperatur ($T_{Kerze}$ ) mit einem Korrekturfaktor ($\Delta T$) korrigiert wird, welcher insbesondere von mindestens einem Betriebsparameter (n, q, $m_{Luft}$) des Verbrennungsmotors (4) abhängt.

6. Verfahren nach Anspruch 5, **dadurch gekennzeichnet, dass** als Betriebsparameter eine Drehzahl (n) und/oder eine Einspritzmenge (q) und/oder eine Luftmasse ($m_{Luft}$) und/oder ein Ladedruck der Luftmasse des Verbrennungsmotors (4) herangezogen werden.

7. Verfahren nach mindestens einem der vorhergehenden Ansprüche, **dadurch gekennzeichnet, dass** die ermittelte Oberflächentemperatur ($T_{Kerze}$) der Glühstiftkerze (2) als Isttemperatur für eine Temperaturregelung der Glühstiftkerze (2) verwendet wird.

8. Vorrichtung zur Bestimmung einer Oberflächentemperatur einer Glühstiftkerze in einem Verbrennungsmotor, bei welchem ein physikalischer Parameter ($R_{Kerze}$, $P_{Kerze}$) zur Ermittlung der Oberflächentemperatur ($T_{Kerze}$) herangezogen wird, wobei Mittel (5, 7) vorhanden sind, welche wenigstens zwei physikalische Parameter ($R_{Kerze}$, $P_{Kerze}$) nur der Glühstiftkerze (2) zur Bestimmung der Oberflächentemperatur ($T_{Kerze}$) der Glühstiftkerze (2) verwenden, **dadurch gekennzeichnet, dass** die Mittel als wenigstens zwei physikalische Parameter einen Widerstand ($R_{Kerze}$) der Glühstiftkerze (2) und eine von der Glühstiftkerze (2) aufgenommene Leistung ($P_{Kerze}$) oder einen Widerstand ($R_{Kerze}$) der Glühstiftkerze (2) und einen Effektivstrom der Glühstiftkerze (2) oder einen Widerstand ($R_{Kerze}$) der Glühstiftkerze (2) und eine Spannung der Glühstiftkerze (2) verwenden und dass die Mittel die wenigstens zwei physikalische Parameter als Eingangssignale eines Kennfelds zur Bestimmung der Oberflächentemperatur im Betrieb der Glühstiftkerze nutzen.

9. Vorrichtung nach Anspruch 8, **dadurch gekennzeichnet, dass** ein Steuergerät (5, 7) mit einer, in einen Brennraum (3) des Verbrennungsmotors (4) ragenden Glühstiftkerze (2) verbunden ist, wobei das Steuergerät (5, 7) die wenigstens zwei physikalischen Parameter ($R_{Kerze}$, $P_{Kerze}$) bestimmt.

**Claims**

1. Method for determining a surface temperature of a sheathed-element glow plug in an internal combustion engine, in which method a physical parameter (RKerze, PKerze) is used for ascertaining the surface temperature (TKerze), wherein at least two physical parameters (RKerze, PKerze) only of the sheathed-element glow plug (2) are used for determining the surface temperature (TKerze) of the sheathed-element glow plug (2), **characterized in that** a resistance (RKerze) of the sheathed-element glow plug (2) and a power (PKerze) drawn by the sheathed-element glow plug (2) or a resistance (RKerze) of the sheathed-element glow plug (2) and a root mean square current of the sheathed-element glow plug (2) or a resistance (RKerze) of the sheathed-element glow plug (2) and a voltage of the sheathed-element glow plug (2) are used as at least two physical parameters and **in that** the at least two physical parameters are used as input signals for a characteristic map for determining the surface temperature in the operation of the sheathed-element glow plug.

2. Method according to Claim 1, **characterized in that** at least one of the at least two physical parameters ($R_{Kerze}$, $P_{Kerze}$) for determining the surface temperature ($T_{Kerze}$) of the sheathed-element glow plug (2) is measured at the sheathed-element glow plug (2) during its operation.

3. Method according to Claim 1, **characterized in that** at least one of the two physical parameters ($R_{Kerze}$, $P_{Kerze}$) of the sheathed-element glow plug (2) is calculated from at least one further physical parameter that is measured at the sheathed-element glow plug (2) during its operation.

4. Method according to Claim 1, **characterized in that** the resistance ($R_{Kerze}$) of the sheathed-element glow plug (2) and/or the power ($P_{Kerze}$) drawn by the sheathed-element glow plug (2) is calculated from the measured current and the measured voltage of the sheathed-element glow plug (2).

5. Method according to at least one of the preceding claims, **characterized in that** the ascertained surface temperature ($T_{Kerze}$) is corrected with a correction factor ($\Delta T$) which in particular depends on at least one operating parameter (n, q, $m_{Luft}$) of the internal combustion engine (4).

6. Method according to Claim 5, **characterized in that** an engine speed (n) and/or an injection quantity (q) and/or an air mass ($m_{Luft}$) and/or a charging pressure of the air mass of the internal combustion engine (4) is used as an operating parameter.

7. Method according to at least one of the preceding claims, **characterized in that** the ascertained surface temperature

($T_{Kerze}$) of the sheathed-element glow plug (2) is used as the actual temperature for a temperature control of the sheathed-element glow plug (2).

8. Device for determining a surface temperature of a sheathed-element glow plug in an internal combustion engine, in which device a physical parameter ($R_{Kerze}$, $P_{Kerze}$) is used for ascertaining the surface temperature ($T_{Kerze}$), wherein there are means (5, 7) which use at least two physical parameters ($R_{Kerze}$, $P_{Kerze}$) only of the sheathed-element glow plug (2) for determining the surface temperature ($T_{Kerze}$) of the sheathed-element glow plug (2), **characterized in that** the means use a resistance ($R_{Kerze}$) of the sheathed-element glow plug (2) and a power ($P_{Kerze}$) drawn by the sheathed-element glow plug (2) or a resistance ($R_{Kerze}$) of the sheathed-element glow plug (2) and a root mean square current of the sheathed-element glow plug (2) or a resistance ($R_{Kerze}$) of the sheathed-element glow plug (2) and a voltage of the sheathed-element glow plug (2) as at least two physical parameters and **in that** the means use the at least two physical parameters as input signals for a characteristic map for determining the surface temperature in the operation of the sheathed-element glow plug.

9. Device according to Claim 8, **characterized in that** a control unit (5, 7) is connected to a sheathed-element glow plug (2) projecting into a combustion chamber (3) of the internal combustion engine (4), wherein the control unit (5, 7) determines the at least two physical parameters ($R_{Kerze}$, $P_{Kerze}$).

**Revendications**

1. Procédé de détermination d'une température de surface d'une bougie crayon de préchauffage dans un moteur à combustion interne, avec lequel un paramètre physique (Rbougie, Pbougie) est utilisé pour déterminer la température de surface (Tbougie), au moins deux paramètres physiques (Rbougie, Pbougie) de la bougie crayon de préchauffage (2) seulement étant utilisés pour déterminer la température de surface (Tbougie) de la bougie crayon de préchauffage (2), **caractérisé en ce que** les au moins deux paramètres physiques utilisés sont une résistance (Rbougie) de la bougie crayon de préchauffage (2) et une puissance (Pbougie) absorbée par la bougie crayon de préchauffage (2) ou une résistance (Rbougie) de la bougie crayon de préchauffage (2) et un courant effectif de la bougie crayon de préchauffage (2) ou une résistance (Rbougie) de la bougie crayon de préchauffage (2) et une tension de la bougie crayon de préchauffage (2), et **en ce que** les au moins deux paramètres physiques sont utilisés comme signaux d'entrée d'un diagramme caractéristique pour déterminer la température de surface pendant le fonctionnement de la bougie crayon de préchauffage.

2. Procédé selon la revendication 1, **caractérisé en ce qu'**au moins l'un des au moins deux paramètres physiques ($R_{bougie}$, $P_{bougie}$) servant à déterminer la température de surface ($T_{bougie}$) de la bougie crayon de préchauffage (2) est mesuré au niveau de la bougie crayon de préchauffage (2) pendant son fonctionnement.

3. Procédé selon la revendication 1, **caractérisé en ce qu'**au moins l'un des deux paramètres physiques ($R_{bougie}$, $P_{bougie}$) de la bougie crayon de préchauffage (2) est calculé à partir d'au moins un paramètre physique supplémentaire qui est mesuré au niveau de la bougie crayon de préchauffage (2) pendant son fonctionnement.

4. Procédé selon la revendication 1, **caractérisé en ce que** la résistance ($R_{bougie}$) de la bougie crayon de préchauffage (2) et/ou la puissance ($P_{bougie}$) absorbée par la bougie crayon de préchauffage (2) sont calculées à partir du courant mesuré et de la tension mesurée de la bougie crayon de préchauffage (2).

5. Procédé selon au moins l'une des revendications précédentes, **caractérisé en ce que** la température de surface ($T_{bougie}$) déterminée est corrigée par un facteur de correction ($\Delta T$), lequel dépend notamment d'au moins un paramètre de fonctionnement (n, q, $m_{air}$) du moteur à combustion interne (4).

6. Procédé selon la revendication 5, **caractérisé en ce que** les paramètres de fonctionnement utilisés sont une vitesse de rotation (n) et/ou une quantité d'injection (q) et/ou une masse d'air ($m_{air}$) et/ou une pression d'admission de la masse d'air du moteur à combustion interne (4).

7. Procédé selon au moins l'une des revendications précédentes, **caractérisé en ce que** la température de surface ($T_{bougie}$) identifiée de la bougie crayon de préchauffage (2) est utilisée comme température réelle pour une régulation de température de la bougie crayon de préchauffage (2).

8. Dispositif de détermination d'une température de surface d'une bougie crayon de préchauffage dans un moteur à combustion interne, avec lequel un paramètre physique ($R_{bougie}$, $P_{bougie}$) est utilisé pour déterminer la température de surface ($T_{bougie}$), des moyens (5, 7) étant présents, lesquels utilisent au moins deux paramètres physiques ($R_{bougie}$, $P_{bougie}$) de la bougie crayon de préchauffage (2) seulement pour déterminer la température de surface ($T_{bougie}$) de la bougie crayon de préchauffage (2), **caractérisé en ce que** les moyens utilisent, comme au moins deux paramètres physiques, une résistance ($R_{bougie}$) de la bougie crayon de préchauffage (2) et une puissance ($P_{bougie}$) absorbée par la bougie crayon de préchauffage (2) ou une résistance ($R_{bougie}$) de la bougie crayon de préchauffage (2) et un courant effectif de la bougie crayon de préchauffage (2) ou une résistance ($R_{bougie}$) de la bougie crayon de préchauffage (2) et une tension de la bougie crayon de préchauffage (2), et **en ce que** les moyens utilisent les au moins deux paramètres physiques comme signaux d'entrée d'un diagramme caractéristique pour déterminer la température de surface pendant le fonctionnement de la bougie crayon de préchauffage.

9. Dispositif selon la revendication 8, **caractérisé en ce qu'**un bloc électronique (5, 7) est relié à une bougie crayon de préchauffage (2) faisant saillie dans une chambre de combustion (3) du moteur à combustion interne (4), le bloc électronique (5, 7) déterminant les au moins deux paramètres physiques ($R_{bougie}$, $P_{bougie}$).

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009047650 A1
- DE 102006060632 A1